# EUROPEAN PATENT APPLICATION

(11) **EP 4 822 859 A1**
(43) Date of publication of application: **14.10.2026**
(21) Application number: 25866373.1
(22) Date of filing: 12.08.2025
(51) Int. Cl.: H01M 50/30, H01M 50/342, H01M 50/249, B60K 1/04

(54) **BATTERY PACK AND VEHICLE INCLUDING SAME**

(30) Priority: 11.09.2024 KR 20240124123; 24.02.2025 KR 20250023739
(71) Applicant: LG Energy Solution, Ltd., Seoul 07335 (KR)
(72) Inventor: LEE, Joo-Hyoung, Daejeon 34122 (KR); KIM, Kwang-Mo, Daejeon 34122 (KR); LEE, Jung-Hoon, Daejeon 34122 (KR); JUNG, Hye-Mi, Daejeon 34122 (KR)
(74) Representative: BCKIP Part mbB
(86) International application number: PCT/KR2025/012231
(87) International publication number: WO 2026/059124

(57) **Abstract**

The present disclosure relates to a battery module that includes a plurality of battery cells, a module case configured to accommodate the plurality of battery cells and having a venting hole formed through at least one side thereof, and a first blocking member provided between the plurality of battery cells and the module case and configured to allow venting gas generated from the battery cells to pass therethrough.

## Description

### TECHNICAL FIELD

The present disclosure relates to a battery module, and a battery pack and vehicle including the same.

This application is based on and claims priority from Korean Patent Application No. 10-2024-0124123, filed on September 11, 2024, and Korean Patent Application No. 10-2025-0023739, filed on February 24, 2025, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or pack may be variously configured depending on the required output voltage or charge/discharge capacity.

Meanwhile, since a battery cell involves a chemical reaction during charging and discharging, its performance may deteriorate when used in environments exceeding an appropriate temperature. Moreover, if thermal control is not properly maintained at an appropriate temperature, there remains a potential risk of unexpected ignition or explosion. In addition, a battery module is configured in a structure in which such battery cells are densely stored inside a module housing. Therefore, if a thermal event occurs in any one of the battery cells, the high-temperature gas and flame discharged therefrom may propagate to adjacent battery cells, leading to a chain reaction of battery cell explosions, which poses a significant safety risk.

Accordingly, conventional battery modules have venting holes formed in the module case to allow venting gas and flames to escape outside the module case. However, venting gas and flames released through the venting holes may also flow back into the module case through the venting holes. In such cases, heat may spread to adjacent battery cells, potentially leading to thermal runaway within the battery module.

In addition, when gas is typically emitted from a battery cell, electrode plate particles or active material particles inside the battery cell may be heated to high temperatures and discharged to the outside. These high-temperature particles may appear in the form of sparks.

In conventional battery modules, sparks may be exposed to the outside through venting holes, and may react with oxygen outside the battery module, thereby creating flames or developing into fires. In addition, if a flame or fire occurs outside a specific battery module, it may spread to adjacent battery modules or devices equipped with the battery module, potentially causing a more serious problem.

Therefore, it is necessary to develop a structure capable of venting high-temperature gases or flames generated to the outside in the event of thermal runaway inside the battery module, preventing heat buildup inside the battery module, and simultaneously preventing the released gases or flames from flowing back into the battery module.

In addition, there is a growing need for technology to prevent sparks from being exposed to the outside of the battery module through venting holes, thereby suppressing the occurrence or spread of flames or fire outside the battery module.

### DISCLOSURE

### Technical Problem

The present disclosure is designed to solve the problems of the related art, and therefore the present disclosure is directed to providing a battery module capable of smoothly discharging gases or flames generated in the event of thermal runaway inside the battery module to the outside of the battery module, thereby effectively preventing or delaying the propagation of thermal runaway between battery cells.

In addition, the present disclosure is also directed to providing a battery module with enhanced safety and reliability by preventing gases or flames discharged outside the battery module when thermal runaway occurs from flowing back into the battery module.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module that includes a plurality of battery cells, a module case configured to accommodate the plurality of battery cells and having a venting hole formed through at least one side thereof, and a first blocking member provided between the plurality of battery cells and the module case and configured to allow venting gas generated from the battery cells to pass therethrough.

The first blocking member may be configured in a sheet form.

The first blocking member may be configured to have gas permeability.

The first blocking member may include a cut portion configured to be opened by the venting gas.

The first blocking member may be configured such that the cut portion is opened to form an outlet.

The cut portion may be configured to extend along a longitudinal direction of the venting hole.

The cut portion may be disposed at a position corresponding to the venting hole.

The cut portion may be positioned offset from beneath the venting hole.

The battery module according to an embodiment of the present disclosure may further include a second blocking member provided on at least one side of the first blocking member.

The second blocking member may be configured to fill a space between the first blocking member and the module case.

The second blocking member may be configured to allow the venting gas to pass therethrough.

The second blocking member may have an opening configured to be opened by the venting gas.

In another aspect of the present disclosure, there is provided a battery pack including a battery module according to the present disclosure.

In another aspect of the present disclosure, there is provided a vehicle including a battery module according to the present disclosure.

### Advantageous Effects

According to one aspect of the present disclosure, by providing a first blocking member and/or a second blocking member configured to allow venting gas to pass therethrough, high-temperature gases or flames generated within a battery cell in the event of an abnormality of the battery cell can be quickly discharged to the outside of the battery module, thereby effectively preventing or delaying the propagation of thermal runaway between the battery cells.

In addition, according to another aspect of the present disclosure, high-temperature gases or flames generated in the event of an abnormality of the battery cell can be prevented from flowing back into the battery module, thereby ensuring the safety and reliability of the battery module.

In addition, according to another aspect of the present disclosure, sparks or flames generated in the event of an abnormality of a battery cell or battery module can be prevented from being exposed to the outside of the pack case, thereby minimizing thermal damage to adjacent battery modules.

In addition, according to another aspect of the present disclosure, by providing a second blocking member in the empty space on the upper inner side of the battery module, the flow of heat or flame may be suppressed within the empty space, thereby minimizing thermal damage to battery cells other than a trigger cell.

In addition, according to another aspect of the present disclosure, events resulting from thermal runaway, such as fire or explosion, in a battery pack including a plurality of battery modules or a device equipped with such modules can be prevented or delayed.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery module according to an embodiment of the present disclosure.
FIG. 2 is an exploded perspective view of a battery module according to an embodiment of the present disclosure.
FIG. 3 is a cross-sectional view of a battery module according to an embodiment of the present disclosure, which may be a cross-sectional view taken along line I - I' in FIG. 1.
FIG. 4 is a cross-sectional view of a battery module of an embodiment of the present disclosure without a first blocking member according to a comparative example.
FIG. 5 is an enlarged view of a portion of a first blocking member included in a battery module according to an embodiment of the present disclosure.
FIG. 6 is a top view of a battery module according to an embodiment of the present disclosure.
FIG. 7 is an enlarged cross-sectional view of a portion of a battery module according to an embodiment of the present disclosure.
FIG. 8 is an enlarged cross-sectional view of a portion of a battery module according to another embodiment of the present disclosure.
FIG. 9 is a schematic perspective view of a battery pack including a battery module according to an embodiment of the present disclosure.
FIG. 10 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up(ward), down(ward), left, right, front(ward), and back(ward) are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), i.e., the longitudinal direction of a battery cell, and the Z-axis direction may indicate an up-down direction (vertical direction) perpendicular to both the X-axis direction and the Y-axis direction.

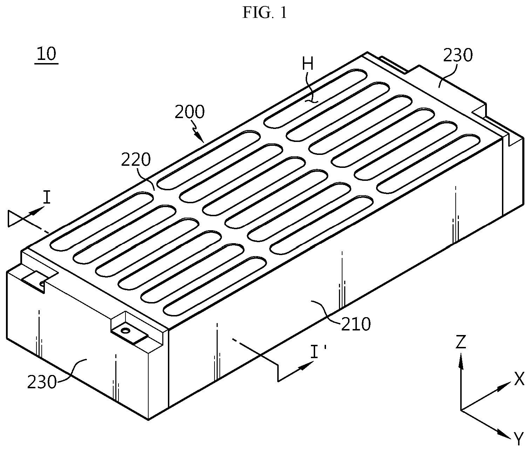

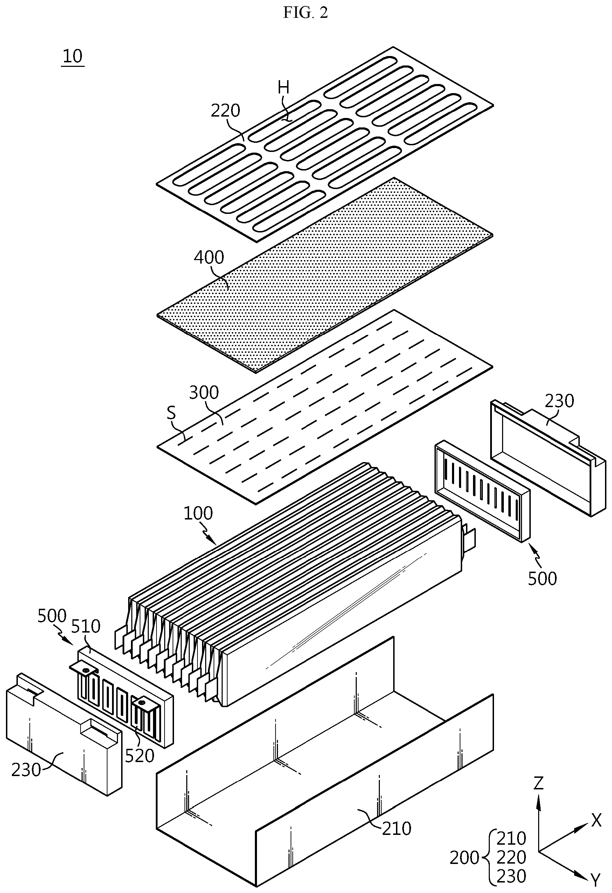

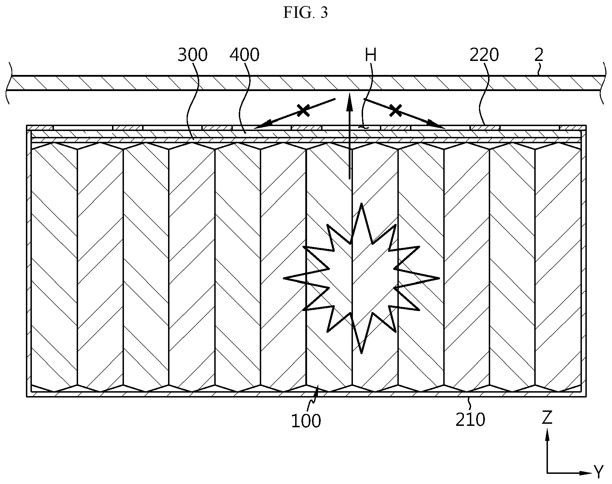

FIG. 1 is an overall perspective view of a battery module according to an embodiment of the present disclosure, and FIG. 2 is an exploded perspective view of a battery module according to an embodiment of the present disclosure. In addition, FIG. 3 is a cross-sectional view of a battery module according to an embodiment of the present disclosure, which may be a cross-sectional view taken along line I - I' in FIG. 1.

Referring to FIGS. 1 to 3, a battery module 10 according to an embodiment of the present disclosure may include a battery cell 100, a module case 200, and a first blocking member 300.

A plurality of battery cells 100 may be provided. The plurality of battery cells 100 may be stacked in one direction. For example, as shown in FIG. 2, the plurality of battery cells 100 may be stacked along the left-right direction (X-axis direction).

The battery cell 100 may include an electrode assembly and a cell case that accommodates the electrode assembly. In addition, the plurality of battery cells 100 may each have an electrode lead. The electrode lead is connected to the electrode assembly and extends outward from the cell case to function as an electrode terminal.

The present disclosure is not limited to a specific type or shape of the battery cell 100, and various battery cells 100 known at the time of filing of the present disclosure may be employed. Although, as shown in the drawing, a pouch-type secondary battery with high energy density and easy stacking will be described in the present embodiment, cylindrical or prismatic secondary batteries may also be used as the battery cell 100.

Referring to FIG. 2, the battery module 10 of the present disclosure may further include a busbar frame assembly 500. The busbar frame assembly 500 may be provided inside the module case 200 so as to cover at least one side of the plurality of battery cells 100. In the present embodiment, as illustrated in FIG. 2, the busbar frame assembly 500 may be coupled to the front and rear of the plurality of battery cells 100.

The busbar frame assembly 500 may include a busbar frame 510 and a plurality of busbars 520. The busbar frame 510 may be coupled to the front and rear of the plurality of battery cells 100. The busbar frame 510 may have slits through which the electrode leads of the battery cells 100 may extend in the +Y- or -Y-axis direction. In addition, the busbar frame 510 may be formed of an electrically insulating material, such as plastic, and configured to allow the busbar 520 to be attached to its outer surface.

The plurality of busbars 520 are means to connect the battery cells 100 in series and/or parallel, and they may be formed of a metal, such as copper, aluminum, or nickel, and may have a rod shape. The electrode leads of the battery cells 100 may pass through the slits in the busbar frame 510 and extend outward from the busbar frame 510, and the extended portions may be attached to the surface of the busbar 520 by welding or other methods.

The module case 200 may be configured to accommodate a plurality of battery cells 100. Specifically, the module case 200 may be configured to have an inner space, and the plurality of battery cells 100 may be accommodated in the inner space.

The module case 200 may be made of a rigid and heat-resistant metal to physically or chemically protect the accommodated battery cells 100.

A venting hole H may be formed in the module case 200. The venting hole H may be formed on at least one side of the module case 200. A venting hole H may be formed by perforating one side of the module case 200. The venting hole H may be configured to discharge venting gases or flames generated from the battery cell 100 to the outside of the module case 200. The venting hole H may enable directional venting in a specific direction.

For example, as illustrated in FIGS. 1 to 3, the venting hole H may be formed in the upper surface of the module case 200. Therefore, directional venting toward the top of the battery module 10 may be enabled through the venting hole H.

A plurality of venting holes H may be provided and arranged at regular intervals in the horizontal direction (X-axis and Y-axis directions).

The battery cells 100 and the upper surface of the module case 200 may be spaced a predetermined distance apart from each other. In this case, a first blocking member 300 may be provided between the plurality of battery cells 100 and the module case 200. The first blocking member 300 may be configured to at least partially cover the plurality of battery cells 100.

In addition, the first blocking member 300 may be configured to allow venting gas to pass therethrough. Specifically, venting gas, flame, and/or heat directed toward the venting hole H may be discharged to the outside through the first blocking member 300 (see the bold arrows in FIG. 3).

According to the above-implemented configuration of the present disclosure, in the event of an abnormality in the battery cell 100, high-temperature gases or flames generated from the battery cell may be quickly discharged to the outside of the battery module 10, thereby effectively preventing or delaying the propagation of thermal runaway between the battery cells 100.

In addition, the first blocking member 300 may be configured to maintain the state of covering the remaining battery cells 100 even if a thermal event occurs in one battery cell 100.

Therefore, according to the above-implemented configuration of the present disclosure, gases or flames discharged outside the module case 200 may be prevented from flowing back into the battery module 10. In addition, the first blocking member 300 may block not only heat but also high-temperature gases, flames, and substances generated from the battery cell 100.

The first blocking member 300 may include a fire-resistant material. In addition, the first blocking member 300 may include a heat-resistant material. For example, the first blocking member 300 may be formed of a mica sheet or the like. Accordingly, even when high-temperature heat is generated, shrinkage does not occur, and the first blocking member 300 maintains morphological stability, thereby stably blocking high-temperature gases and flames generated from the battery cell 100.

Alternatively, for example, the first blocking member 300 may be formed of breathable and fire-resistant glass fiber. Therefore, even when a flame occurs, the first blocking member 300 is not damaged, so that high-temperature gases and flames generated from the battery cell 100 may pass through the first blocking member 300 and then be discharged to the outside.

In addition, the first blocking member 300 may include a material with insulating properties. Accordingly, even when high-temperature heat is generated, the heat may be suppressed from moving outside the first blocking member 300.

Alternatively, the first blocking member 300 may be configured as a composite material comprised of a fire-resistant layer and an insulating layer. However, the material of the first blocking member 300 is not limited to the materials described above.

The first blocking member 300 may be configured in the form of a sheet. The first blocking member 300 may be configured as a very thin sheet. In addition, the first blocking member 300 may be configured to correspond to the size or shape of one side of the module case 200 where the venting holes H are formed.

The first blocking member 300 may be configured to cover the venting hole H from the inside. In this case, the first blocking member 300 may be configured as a sheet to be mounted on the battery cells 100. The first blocking member 300 may be configured to cover all of the plurality of venting holes H.

According to the above-implemented configuration of the present disclosure, venting gases or flames generated from a battery cell 100 may pass more smoothly and quickly through the first blocking member 300.

Meanwhile, referring to FIGS. 1 to 3, the module case 200 may include a case body 210 and a top plate 220. The case body 210 may be configured such that at least the upper surface is open. For example, the case body 210 may be configured such that the upper surface, front surface, and rear surface are open. That is, the case body 210 may be configured as a U-frame.

The case body 210 may be made of a rigid and heat-resistant metal to physically or chemically protect the contained battery cells 100.

The top plate 220 may be provided to form the upper surface of the module case 200. The top plate 220 may be coupled to the open upper surface of the case body 210. The top plate 220 may be welded to the case body 210. In this case, the top plate 220 and the case body 210 may be coupled to form a rectangular tube with front and rear openings.

The module case 200 may include an end plate 230 provided on the open front and back sides of the case body 210. The end plate 230 may be welded to the case body 210. Although not shown for convenience, the end plate 230 may, for example, have an inner surface made of an insulating material and an outer surface made of a metal. In addition, the end plate 230 may be partially provided with holes or slits through which components that require external exposure, such as a positive and negative electrode terminals of the battery module 10 or connectors, are exposed.

In addition, the module case 200 may be formed in various other shapes. For example, the module case 200 may include a box-shaped lower case having an upper opening and an upper cover that closes the upper opening of the lower case.

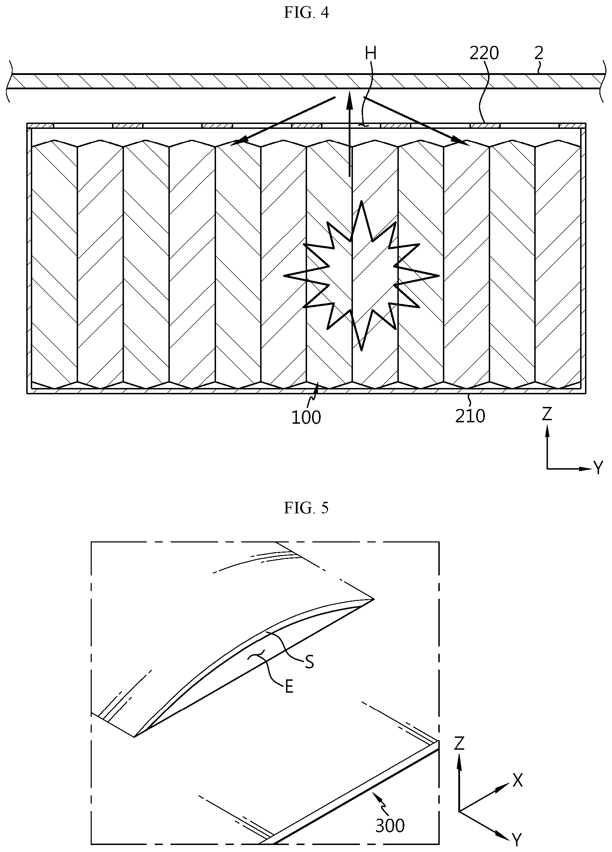

FIG. 4 is a cross-sectional view of a battery module of an embodiment of the present disclosure without a first blocking member according to a comparative example.

When the battery module 10 is not provided with the first blocking member 300, as disclosed in the comparative example illustrated in FIG. 4, venting gas or flames discharged to the outside through the venting hole H may be reflected inward by structures outside the battery module 10, such as the pack case 2, and may then flow back into the module case 200 through the venting hole H. In such a case, heat may spread to other adjacent battery cells 100, potentially causing thermal runaway of the battery module 10. In addition, sparks may be exposed to the outside through the venting hole H and may react with oxygen outside the battery module 10, thereby generating a flame or developing into a fire.

However, since the battery module 10 of the present disclosure includes the first blocking member 300, high-temperature gases or flames generated in a battery cell 100 in the event of an abnormality of the battery cell 100 may be prevented from flowing back into the battery module 10.

That is, since the battery module 10 of the present disclosure includes the first blocking member 300, when thermal runaway occurs in the battery module 10, not only may the venting gases or flames generated inside the battery module 10 be smoothly discharged to the outside of the battery module 10, but the discharged venting gases or flames may also be prevented from flowing back into the battery module 10. Therefore, by minimizing thermal propagation to neighboring battery cells 100, thermal runaway propagation may be effectively prevented or delayed, thereby ensuring the safety and reliability of the battery module 10.

Hereinafter, various embodiments of the first blocking member 300 configured to allow venting gas to pass through will be described.

As an example, the first blocking member 300 may be configured to have gas permeability. That is, the first blocking member 300 may be configured as a breathable material. For example, the first blocking member 300 may be formed of a material such as ceramic fiber, silica fiber, or glass fiber. However, the material of the first blocking member 300 is not limited thereto, and any other breathable material may be applied thereto.

According to the above-implemented configuration of the present disclosure, venting gas, flame, and/or heat thereof may pass through the first blocking member 300 and then be discharged to the outside of the module case 200 without fracture or damage to the first blocking member 300.

In addition, according to the above-implemented configuration of the present disclosure, since the first blocking member 300 remains in a state of covering other battery cells 100, venting gases or flames discharged to the outside may fundamentally be prevented from flowing back into the module case 200 through the open venting hole H.

As another example, the first blocking member 300 may be configured such that at least a portion thereof is ruptured by the venting gas. The first blocking member 300 may be made of a rupturable material. For example, the first blocking member 300 may be made of fireproof paper.

Specifically, at least a portion of the first blocking member 300 may be ruptured by the pressure or heat of the venting gases directed toward the venting hole H. Accordingly, when a thermal event occurs in a specific battery cell 100, the first blocking member 300 provided on one side of the specific battery cell 100 may be ruptured and opened to allow venting gases or flames to escape. Therefore, the venting gases or the like may be discharged to the outside of the first blocking member 300 through the opened portion of the first blocking member 300.

That is, in a normal state, the first blocking member 300 may cover and protect the battery cells 100 within the module case 200. However, when a thermal event that generates venting gases or flames occurs in some battery cells 100, at least a portion of the first blocking member 300 may rupture, thereby opening at least some of the venting holes H.

Therefore, according to the above-implemented configuration of the present disclosure, at least a portion of the first blocking member 300 may rupture, so that gases or flames may pass through the first blocking member 300 to the venting hole H. Therefore, the gases or flames may be quickly discharged to the outside of the battery module 10.

FIG. 5 is an enlarged view of a portion of a first blocking member included in a battery module according to an embodiment of the present disclosure.

As another example, as disclosed in the embodiment illustrated in FIG. 5, the first blocking member 300 may include a cut portion S. The cut portion S may be configured to be opened by venting gases. The cut portion S may be configured so that the discharged venting gases or flames are directed toward the venting hole H.

As an embodiment, the first blocking member 300 may be formed of a breathable sheet and provided with the cut portion S. Alternatively, as an embodiment, the first blocking member 300 may be formed of a non-breathable sheet and provided with the cut portion S. Alternatively, as an embodiment, the first blocking member 300 may be formed of a composite material including a fire-resistant layer and an insulating layer, and may have a cut portion S.

According to the above-implemented configuration of the present disclosure, when a thermal event of the battery cell 100 occurs, gases or flames generated within the battery module 10 may pass through the first blocking member 300 via the open cut portion S and then be discharged to the outside of the module case 200.

The cut portion S may be formed by a method such as cutting or notching. The cut portion S may be provided at a predetermined location. A plurality of cut portions S may be provided. The cut portions S may be arranged at predetermined intervals in the horizontal direction (X-axis and/or Y-axis direction). For example, the plurality of cut portions S may be formed in a row along the longitudinal direction (Y-axis direction) of the battery cell 100.

The cut portion S may be configured in a linear shape. For example, the cut portion S may be configured to extend along the longitudinal direction of the venting hole H. Alternatively, the cut portion S may be configured to extend along the width direction of the venting hole H. However, the shape of the cut portion S is not limited thereto.

As a more specific example, as illustrated in the embodiment in FIG. 5, the cut portion S may be configured in a slit shape. Therefore, as venting gases or flames are concentrated and ejected into a localized area, a portion of the sheet of the first blocking member 300 may be lifted by the pressure, thereby opening the cut portion S.

The first blocking member 300 may be configured such that an outlet E is formed when the cut portion S is opened. The outlet E may be configured to allow fluid, such as venting gas or flame, to be discharged to the outside after moving along the interface of the lifted first blocking member 300.

According to the above-implemented configuration of the present disclosure, when a thermal event occurs in the battery cell 100, gases or flames generated within the battery module 10 may pass through the first blocking member 300 through the open cut portion S and then be discharged outside the module case 200.

Therefore, in the event of an abnormality of the battery cell 100, the venting gases or flames may be quickly discharged to the outside of the module case 200 through the venting hole H, thereby preventing an increase in internal pressure of the module case 200 and preventing additional chain reactions of fires in other battery cells 100.

In particular, the outlet E may be formed in a vertical direction. Here, the vertical direction may refer not only to a direction at a right angle to the first blocking member 300, but also to a substantially vertical direction. In addition, the outlet E may be configured to open in the horizontal direction, for example, in the left-right direction. Accordingly, the substances released in a substantially vertical direction from the battery cell 100 may be discharged in the horizontal direction through the outlet E.

According to the above-implemented configuration of the present disclosure, the discharge direction of the venting gas or flame may be naturally deflected by the first blocking member 300, so that the gas or flame may be vented in the diagonal or horizontal direction through the cut portion S.

Therefore, according to the above-described embodiment of the present disclosure, the discharge direction of the venting gas or flame may be deflected or converted to a horizontal direction, thereby minimizing direct discharge in the upward direction.

In the comparative example illustrated in FIG. 4, since the venting gas or flame is discharged vertically through the venting hole H, it may be reflected by other structures outside the battery module 10, such as the pack case 2, and then flow back into the battery module 10. However, according to the above-implemented configuration of the present disclosure, since venting gases or flames are discharged obliquely through the cut portion S, the possibility of reflection on other structures outside the battery module 10 may be minimized. Therefore, high-temperature gas or flames may be prevented from flowing back into the module case 200.

In addition, according to the above-implemented configuration of the present disclosure, sparks may be prevented from being discharged to the outside by being reflected by the lifted first blocking member 300. Therefore, sparks generated in the event of an abnormality in the battery cell 100 or battery module 10 may be prevented from being exposed to the outside of the battery module through the venting hole, thereby suppressing or preventing the occurrence or spread of flames or fire outside the battery module.

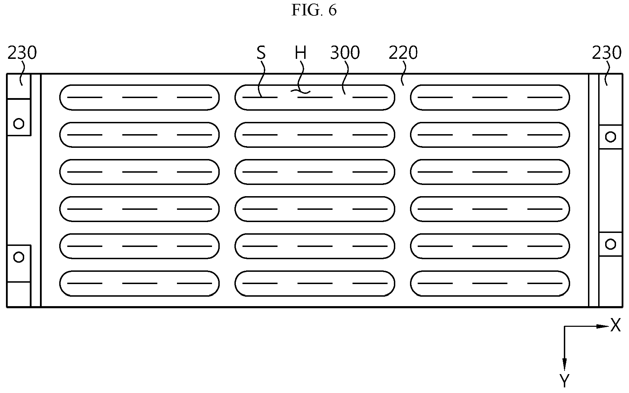

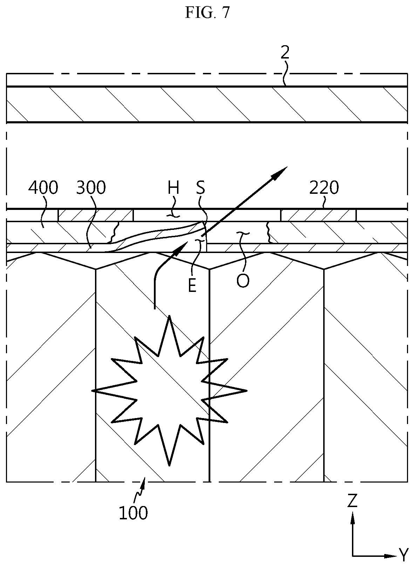

FIG. 6 is a top view of a battery module according to an embodiment of the present disclosure, and FIG. 7 is an enlarged cross-sectional view of a portion of a battery module according to an embodiment of the present disclosure.

For example, as disclosed in the embodiments illustrated in FIGS. 6 and 7, the cut portion S may be disposed at a position corresponding to the venting hole H. The cut portion S may be provided below the venting hole H. The cut portion S may be configured such that venting gases or flames generated in the battery cell 100 travel directly toward the venting hole H.

According to the above-implemented configuration of the present disclosure, venting gases or flames discharged through the outlet E formed on the cut portion S may move quickly toward the venting hole H and then be discharged to the outside of the module case 200. Therefore, heat accumulation may be suppressed within the battery module 10, thereby effectively preventing or delaying the propagation of thermal runaway between the battery cells 100.

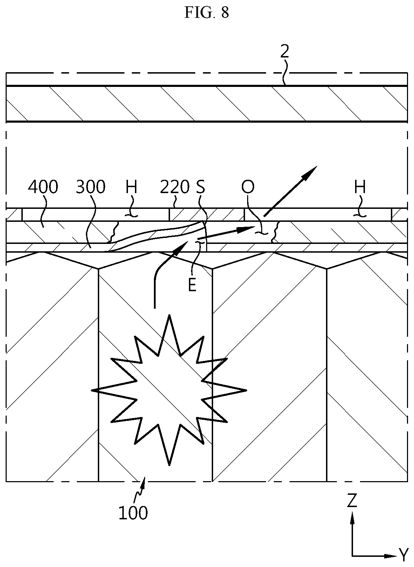

FIG. 8 is an enlarged cross-sectional view of a portion of a battery module according to another embodiment of the present disclosure.

As another embodiment, as illustrated in FIG. 8, the cut portion S may be positioned offset from beneath the venting hole H. That is, the cut portion S may be positioned between the venting holes H. The cut portion S may be provided between adjacent venting holes H among a plurality of venting holes H. In other words, the cut portion may be formed at a position corresponding to the main body of the top plate 220.

According to the above-implemented configuration of the present disclosure, when the venting gases or flame are concentrated in the cut portion S and the outlet E is formed by the pressure thereof, the venting gases or flame may be discharged obliquely toward the outside of the first blocking member 300 through the outlet E, and may collide with the main body of the top plate 220 and then head toward the venting hole H.

That is, according to the above-implemented configuration of the present disclosure, venting gases or flames may be deflected at least once and then vented to the outside of the module case 200. Therefore, when venting gases or flames discharged through the outlet E are discharged through the venting hole H, they may be prevented from colliding with other structures outside the battery module 10, such as the pack case 2, and then flowing back into the battery module 10 through the open outlet E.

In addition, according to the above-implemented configuration of the present disclosure, direct damage to the battery cell 100 by high-temperature sparks or the like may be minimized.

Referring to FIGS. 1, 2, 7, and 8, the battery module 10 according to an embodiment of the present disclosure may further include a second blocking member 400. The second blocking member 400 may be provided in the space between the battery cell 100 and the module case 200. The second blocking member 400 may be configured in the form of a pad having a predetermined thickness.

The second blocking member 400 may include a material with excellent heat resistance, fire resistance, and/or insulation properties. For example, the second blocking member 400 may be made of a material such as silicone, polyurethane, or aerogel. However, the material of the second blocking member 400 is not limited thereto.

The second blocking member 400 may be provided on at least one side of the first blocking member 300. The second blocking member 400 may be configured to cover at least one side of the first blocking member 300.

For example, as disclosed in the embodiment illustrated in FIG. 2, the second blocking member 400 may be provided on the outer side of the first blocking member. That is, the second blocking member 400 may be provided in the space between the first blocking member 300 and the module case 200. Moreover, the second blocking member 400 may be configured to fill the space between the first blocking member 300 and the module case 200. In addition, in this case, the second blocking member 400 may be configured to cover the venting hole H from the inside.

Alternatively, unlike the above embodiment, the second blocking member 400 may be provided on the inner side of the first blocking member 300. That is, the second blocking member 400 may be provided in the space between the first blocking member 300 and the battery cell 100. In addition, the second blocking member 400 may be configured to fill the space between the first blocking member 300 and the battery cell 100.

According to the above-implemented configuration of the present disclosure, the second blocking member 400 is provided in the empty space on top of the battery module 10, thereby suppressing the flow of heat or flame within the empty space. This may minimize thermal damage to the battery cells 100 other than the trigger cell.

In addition, according to the above-implemented configuration of the present disclosure, the inflow of oxygen into the module case 200 may be suppressed during the initial stage of thermal runaway. This may prevent sparks from reacting with oxygen to form flames. In addition, by eliminating one of the three elements of flame, the possibility of flame formation may be minimized.

In addition, according to the above-implemented configuration of the present disclosure, the second blocking member 400 may suppress radiant heat transferred to the battery cells 100 from flames generated at the top of the battery module 10 and/or convective heat transferred as high-temperature gas flows. In addition, the second blocking member 400 may suppress heat conduction from high-temperature particles or the like accumulated at the upper portion of the battery module 10 to the battery cell.

In addition, the second blocking member 400 may be compressed by the force exerted by the top plate 220 against the case body 210 when the top plate 220 is coupled to the case body 210. According to the above-implemented configuration of the present disclosure, the airtightness of the space between the battery cell 100 and the top plate 220 may be improved.

The second blocking member 400 may be configured to allow venting gas to pass through. Therefore, when a thermal event occurs in any battery cell 100, the venting gas, flame, and/or heat may pass through not only the first blocking member 300 but also the second blocking member 400, and flow to the venting hole H.

For example, the second blocking member 400 may have an opening O configured to be opened by venting gas. As an example, at least a portion of the second blocking member 400 may be configured to be thermally decomposed by the venting gas. A portion of the second blocking member 400 where heat is concentrated may be thermally decomposed and opened. The opening O may be formed at a position corresponding to the cut portion S. Alternatively, the opening O may be formed regardless of the location of the cut portion S.

Alternatively, unlike the above embodiment, the second blocking member 400 may also include a slit-shaped cut portion. The structure and effect of the cut portion of the second blocking member 400 may be identical to the structure and effect of the cut portion S of the first blocking member 300 described above.

According to the above-implemented configuration of the present disclosure, in the event of an abnormality in the battery cell 100, high-temperature gases or flames generated within the battery cell 100 may be quickly discharged to the outside of the module case 200 through the cut portion S and the opening O. Therefore, thermal runaway propagation between the battery cells 100 may be effectively prevented or delayed.

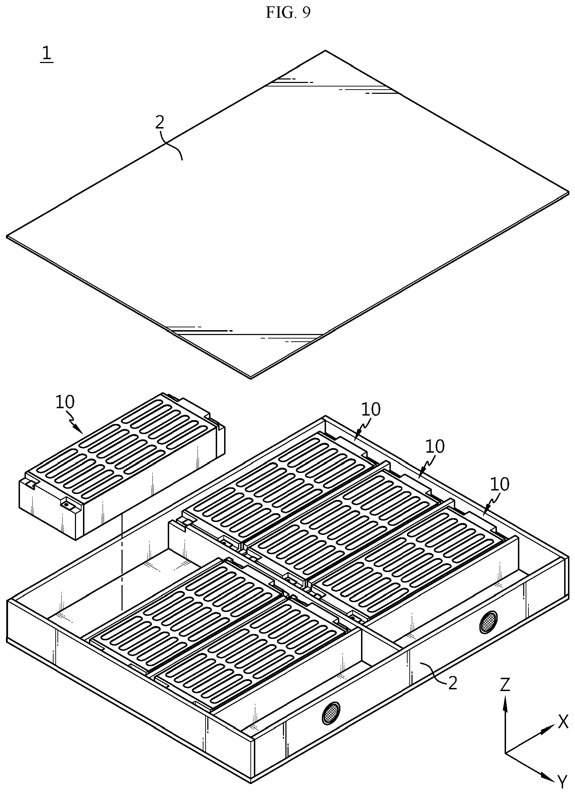

FIG. 9 is a schematic perspective view of a battery pack including a battery module according to an embodiment of the present disclosure.

Referring to FIG. 9, a battery pack 1 according to an embodiment of the present disclosure may include one or more battery modules 10 according to an embodiment of the present disclosure as described above. The battery pack 1 according to the present disclosure may further include a pack case 2 for accommodating a BMS (Battery Management System) for integrated control of the charging and discharging of one or more battery modules, a current sensor, a fuse, and other components described above.

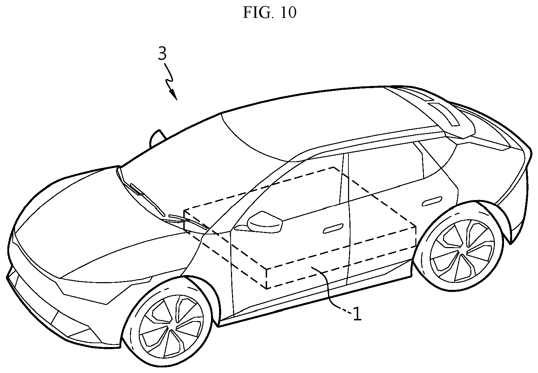

FIG. 10 is a schematic perspective view of a vehicle including a battery pack according to an embodiment of the present disclosure.

Referring to FIG. 10, a vehicle 3 according to an embodiment of the present disclosure may include one or more battery packs 1 according to an embodiment of the present disclosure or battery modules 10 according to an embodiment of the present disclosure. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 operates by receiving power from the battery pack 1 or battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a plurality of battery cells;
a module case configured to accommodate the plurality of battery cells and having a venting hole formed through at least one side thereof; and
a first blocking member provided between the plurality of battery cells and the module case and configured to allow venting gas generated from the battery cells to pass therethrough.

2. The battery module of claim 1,
wherein the first blocking member is configured in a sheet form.

3. The battery module of claim 1,
wherein the first blocking member is configured to have gas permeability.

4. The battery module of claim 1,
wherein the first blocking member comprises a cut portion configured to be opened by the venting gas.

5. The battery module of claim 4,
wherein the first blocking member is configured such that the cut portion is opened to form an outlet.

6. The battery module of claim 4,
wherein the cut portion is configured to extend along a longitudinal direction of the venting hole.

7. The battery module of claim 4,
wherein the cut portion is disposed at a position corresponding to the venting hole.

8. The battery module of claim 4,
wherein the cut portion is positioned offset from beneath the venting hole.

9. The battery module of claim 1,
further comprising a second blocking member provided on at least one side of the first blocking member.

10. The battery module of claim 9,
wherein the second blocking member is configured to fill a space between the first blocking member and the module case.

11. The battery module of claim 9,
wherein the second blocking member is configured to allow the venting gas to pass therethrough.

12. The battery module of claim 9,
wherein the second blocking member has an opening configured to be opened by the venting gas.

13. A battery pack comprising a battery module according to any one of claims 1 to 12.

14. A vehicle comprising a battery module according to any one of claims 1 to 12.
